# EUROPEAN PATENT APPLICATION

(11) **EP 2 006 167 A2**
(43) Date of publication of application: **24.12.2008**
(21) Application number: 08011086.9
(22) Date of filing: 18.06.2008
(51) Int. Cl.: B60R 21/215

(54) **Airbag lid structure**

(30) Priority: 18.06.2007 JP 2007159614
(71) Applicant: Calsonic Kansei Corporation, Tokyo 164-8602 (JP)
(72) Inventor: Funakura, Kazuki, Tokyo 164-8602 (JP)
(74) Representative: Grünecker, Kinkeldey, Stockmair & Schwanhäusser Anwaltssozietät

(57) **Abstract**

An airbag lid structure includes: an airbag lid member which forms an opening for swelling an expanded airbag body; a cleavage groove formed on a back surface of the airbag lid member, and which defines the airbag lid member into a general surface located outside of the opening and a lid located inside of the opening, the lid including a front end edge and a back end edge; a first cleavage line structuring the cleavage groove and extending in a first direction; a second cleavage line structuring the cleavage groove and extending in a second direction substantially perpendicular to the first direction; a tear line included in the second cleavage line and corresponding to the front end edge of the lid; and a hinge line included in the second cleavage line and corresponding to the back end edge of the lid, and having a delayed rupture generating part which generates lag in rupturing of the hinge line relative to the tear line.

## Description

### CROSS REFERENCE TO RELATED APPLICATIONS

The present application is based on and claims priority from Japanese Patent Application No. 2007-159614, filed June 18, 2007, the disclosure of which is hereby incorporated by reference herein in its entirety.

### BACKGROUND

The present invention relates to a lid of an airbag, and more specifically, to a structure of an airbag lid.

A vehicle such as an automobile for example is provided with an instrument panel in a vehicle interior at a front part thereof. A part of the instrument panel on a side of a passenger seat is arranged with an airbag device, for protecting an occupant on the passenger seat at the time of emergency. Such an airbag device is disclosed in Japanese patent application publication No. 2004-231027 for example..

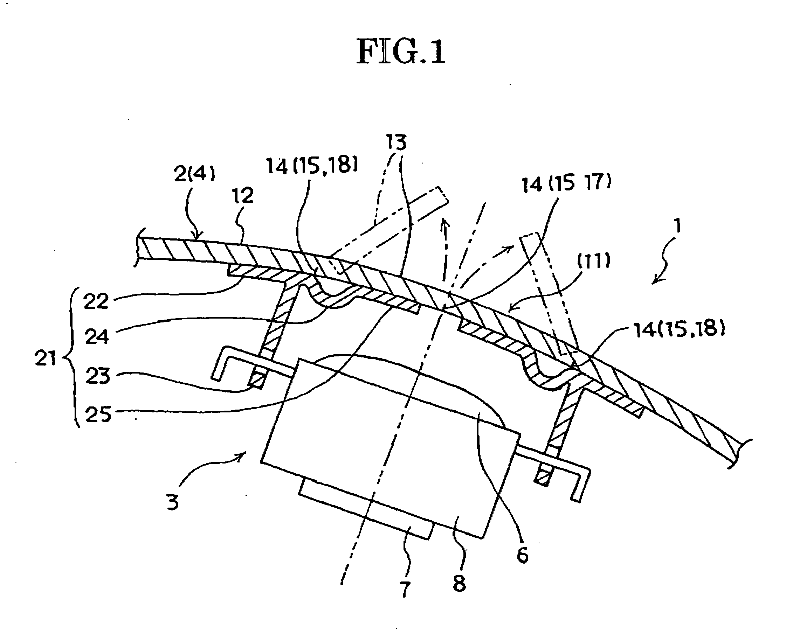

FIG. 1 to FIG. 7 illustrates an airbag device 1 according to an explanatory example. Referring to FIG. 1, the airbag device 1 is provided with an airbag module 3 disposed inside of an instrument panel 2, and an airbag lid member 4 provided on a surface of the instrument panel 2.

The airbag module 3 includes an airbag body 6, and an inflator 7 which generates pressure gas for expanding the airbag body 6, which are accommodated in a module container 8.

The airbag lid member 4 functions as a cover member which covers the airbag module 3 to conceal the airbag module 3, and which forms an opening 11 for swelling the expanded and developed airbag body 6 toward a vehicle interior.

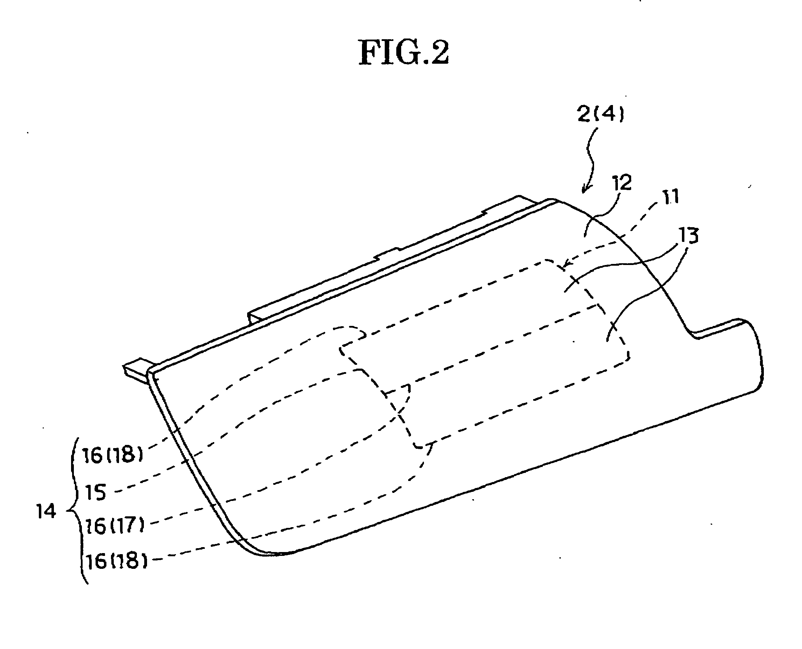

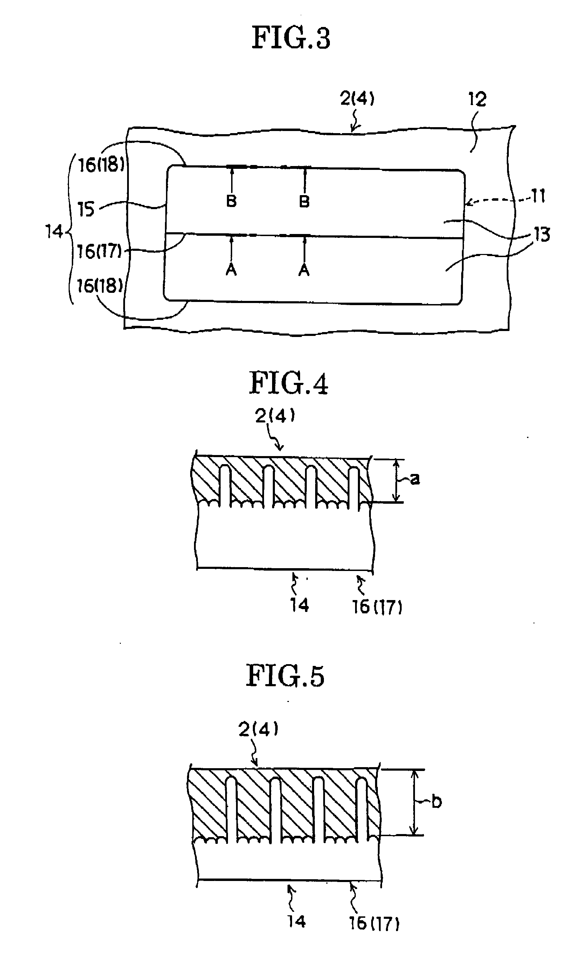

Referring to FIGs. 2 and 3, a back surface of the airbag lid member 4 facing the airbag module 3 is formed with a cleavage groove 14. The cleavage groove 14 defines or partitions the airbag lid member 4 into a general surface 12 as an outside part of the opening 11, and a lid 13 located inside of the opening 11.

The cleavage groove 14 includes a vertical cleavage line 15 and a horizontal cleavage line 16 which are formed linearly. The horizontal cleavage line 16 further includes a tear line 17 corresponding to a front end edge or a tip edge of the lid 13, and a hinge line 18 corresponding to a back end edge or a posterior end edge of the lid 13.

Referring to FIG. 4 and 5, the tear line 17 and the hinge line 18 are formed to provide distinction between the tear line 17 and the hinge line 18, by changing residual thickness thereof. More specifically, the tear line 17 and the hinge line 18 are so set that an amount of residual thickness "a" of the tear line 17 illustrated in FIG. 4 becomes less than an amount of residual thickness "b" of the hinge line 18 illustrated in FIG. 5, so as to establish a relationship "a < b".

Referring to FIG. 1, the airbag lid member 4 and the airbag module 3 are coupled together through an attachment frame 21.

The attachment frame 21 integrally includes a flange 22, an attachment leg 23, a door 24, and an elongated part 25. The flange 22 is fixed to an outer circumferential part of the opening 11 on a back surface of the general surface 12. The attachment leg 23 downwardly extends along the opening 11 from an inner edge of the flange 22. The door 24 is fixed to a back surface of the lid 13. The elongated part 25 connects a base of the attachment leg 23 and a back end edge of the door 24, and has a configuration in which a part of the elongated part 25 diverts or protrudes downwardly toward the airbag module 3. It is to be noted that the elongated part 25 is not fixed to the back surface of the airbag lid member 4.

According to this structure, the airbag body 6, folded in the module container 8 to be stored therein, is expanded and deployed inside of the instrument panel 2, by supplying of the pressure gas from the inflator 7 due to activation of the inflator 7 at the time when impact force equal to or more than a predetermined value is applied to a body of the vehicle. The deployed airbag body 6 is guided by the attachment leg 23 to press a predetermined part of the back surface of the airbag lid member 4 including the door 24 and the lid 13, so as to rupture or cleave the cleavage groove 14. Thereby, the lid 13 is unclosed to open the opening 11, and the airbag body 6 is swelled into the vehicle interior toward the occupant.

When the lid 13 opens, the tear line 17 having the small amount of residual thickness "a" is ruptured prior to the hinge line 18, and the hinge line 18 having the large amount of residual thickness "b" is then ruptured in a delayed manner, such that the lid 13 rotates around a position of the hinge line 18 as the center of hinge.

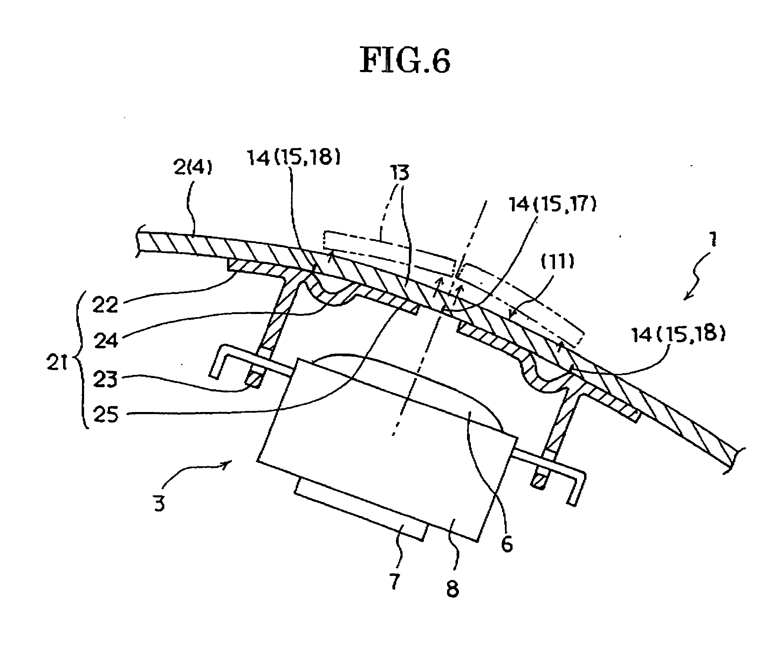

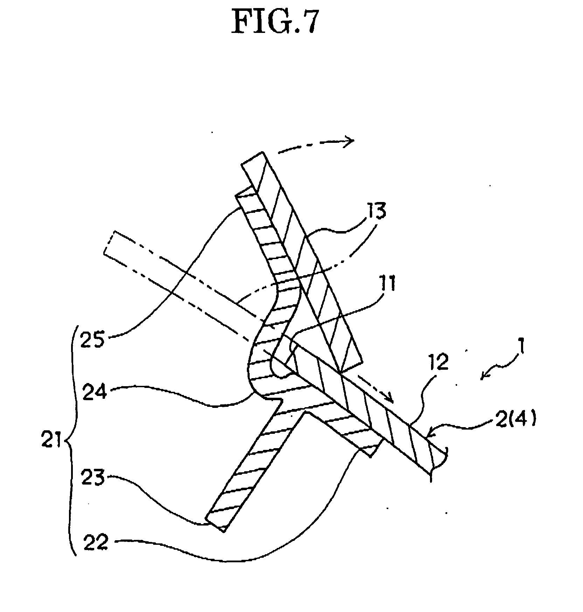

According to the airbag lid structure of the above-described explanatory example, the hinge line 18 is ruptured after the tear line 17 by using a difference in the amounts of residual thickness or a difference in thickness, such that the position of the hinge line 18 becomes the center of hinge. However, behavior of deployment of the airbag body 6 has a variation. Therefore, when the hinge line 18 is ruptured earlier than predetermined time of rupture of the hinge line 18 or ruptured virtually simultaneously with the tear line 17 as illustrated in FIG. 6, a position of the center of hinge, i.e., a position of the back end edge of the lid 13, may shift from the opening 11 outwardly to the general surface 12 as illustrated in FIG. 7. Thus, problems such as improper pivot of the lid 13 around the center of hinge, parallel displacement of the lid 13, excessive stretch of the elongated part 25, and so forth may occur. Further problem is that setting and adjustment of the amounts of the residual thickness between the hinge line 18 and the tear line 17 are extremely difficult, since fabrication of changing the amounts of residual thickness of the hinge line 18 and the tear line 17 are delicate.

### SUMMARY

At least one objective of the present invention is to provide an airbag lid structure capable of heightening certainty and increasing stability in acting of an airbag device, irrespective of a variation in behavior of deployment of an airbag body.

To achieve these and other advantages and in accordance with the purpose of the invention, as embodied and broadly described herein, the invention provides an airbag lid structure, comprising: an airbag lid member provided on an instrument panel and which forms an opening for swelling an expanded airbag body therefrom toward a vehicle interior; a cleavage groove formed on a back surface of the airbag lid member on an opposite side of the vehicle interior, and which defines the airbag lid member into a general surface and a lid, the general surface being located outside of the opening and the lid being located inside of the opening, wherein the lid includes a front end edge, and a back end edge corresponding to center of rotation of the lid; a first cleavage line structuring the cleavage groove and extending in a first direction; a second cleavage line structuring the cleavage groove and extending in a second direction substantially perpendicular to the first direction; a tear line included in the second cleavage line and corresponding to the front end edge of the lid; and a hinge line included in the second cleavage line and corresponding to the back end edge of the lid, and having a delayed rupture generating part which generates lag in rupturing of the hinge line relative to the tear line.

It is to be understood that both the foregoing general description and the following detailed description are exemplary, and are intended to provide further explanation of the invention as claimed.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the specification, serve to explain the principles of the invention.
FIG. 1 is a side view illustrating an airbag device according to an explanatory example.
FIG. 2 is a plan view illustrating an airbag lid structure illustrated in FIG. 1 according to the explanatory example.
FIG. 3 is a bottom view of FIG. 2 according to the explanatory example.
FIG. 4 is a cross-sectional view of a tear line illustrated in FIG. 2, taken along a line A-A, according to the explanatory example.
FIG. 5 is a cross-sectional view of a hinge line illustrated in FIG. 2, taken along a line B-B, according to the explanatory example.
FIG. 6 illustrates improper action of the airbag device according to the explanatory example.
FIG. 7 is a partially-enlarged view illustrating the improper action of the airbag device subsequent to the action illustrated in FIG. 6 according to the explanatory example.
FIG. 8 is a side view illustrating an airbag device according to an embodiment of the invention.
FIG. 9 is a plan view illustrating an airbag lid structure illustrated in FIG. 8 according to the embodiment of the invention.
FIG. 10 is a bottom view of the airbag lid structure according to the embodiment of the invention.
FIG. 11 is a cross-sectional view of a tear line illustrated in FIG. 10, taken along a line C-C, according to the embodiment of the invention.
FIG. 12 is a cmss-sectional view of a hinge line illustrated in FIG. 10, taken along a line D-D, according to the embodiment of the invention.

### DETAILED DESCRIPTION

Reference will now be made in detail to the present preferred embodiments of the invention, examples of which are illustrated in the accompanying drawings. Wherever possible, the same reference numbers are used in the drawings and the description to refer to the same or like parts. The scope of the present invention, however, is not limited to these embodiments. Within the scope of the present invention, any structure and material described below can be appropriately modified.

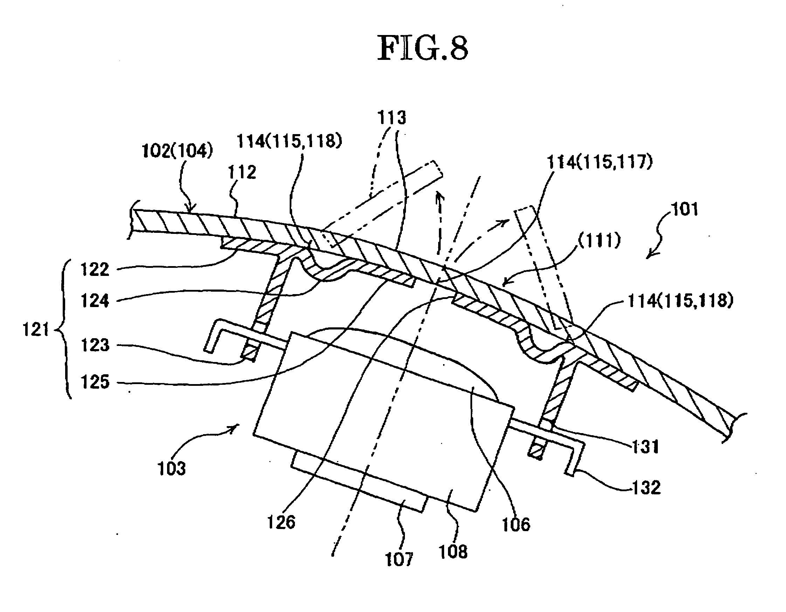

FIG. 8 to FIG. 12 illustrate an embodiment of the invention.

A vehicle such as an automobile for example is provided with an instrument panel 102 in a vehicle interior at a front part of the vehicle interior. A part of the instrument panel 102 on a side of a passenger seat is arranged with an airbag device 101, for protecting an occupant on the passenger seat at the time of emergency.

FIG. 8 illustrates the airbag device 101 according to the present embodiment. Referring to FIG. 8, the airbag device 101 includes an airbag module 103, and an airbag lid member 104. The airbag module 103 is disposed inside of the instrument panel 102, and the airbag lid member 104 is provided on a surface of the instrument panel 102.

The airbag module 103 includes an airbag body 106, and an inflator 107. The inflator 107 is possible to generate pressure gas which expands the airbag body 106. The airbag body 106 and the inflator 107 are accommodated in a module container 108. The airbag body 106 is stored in the module container 108 above the inflator 107 in a folded manner. A lower part of the module container 108 is fixed to an unillustrated vehicle-body reinforcing member.

The airbag lid member 104 or a cover member is designed to cover the airbag module 103 to conceal the airbag module 103, and to form an opening 111 which swells the expanded and developed airbag body 106 toward a vehicle interior.

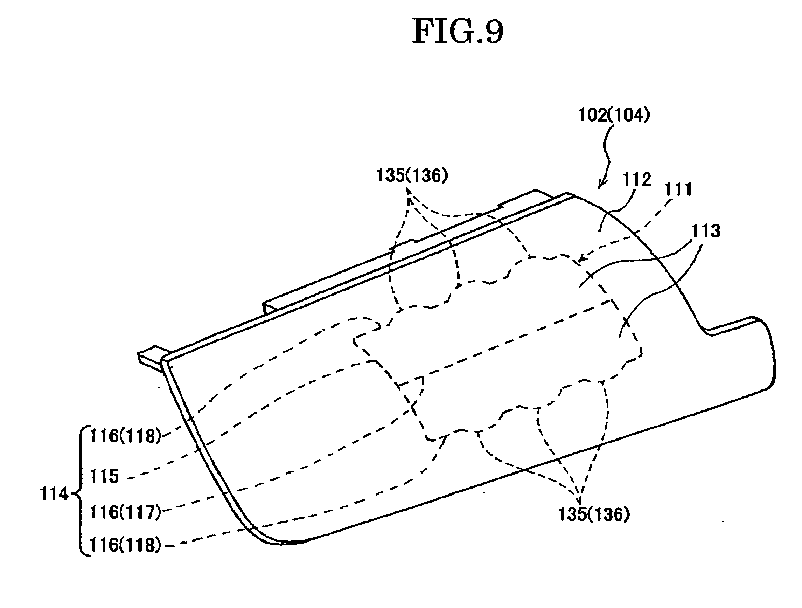

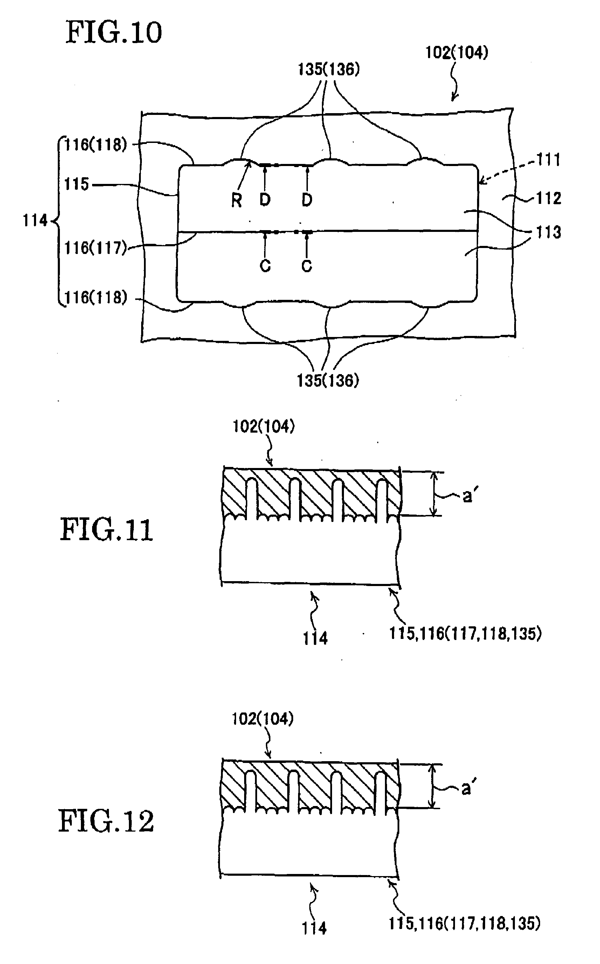

FIG. 9 is a plan view illustrating the airbag lid structure illustrated in FIG. 8, and FIG. 10 is a bottom view of the airbag lid structure according to the present embodiment. Referring to FIGs. 9 and 10, a back surface of the airbag lid member 104 facing the airbag module 103 is formed with a cleavage groove 114. The cleavage groove 114 defines or partitions the airbag lid member 114 into a general surface 112 and the lid 113. The general surface 112 is located outside of the opening 111 as an outside part of the opening 111, and the lid 113 is located inside of the opening 111. The cleavage groove 114 according to the present embodiment has an alphabet "H" like configuration in planar view, by which both of the two lids 113 are opened, although a configuration of the cleavage groove 114 is not limited thereto. For example, the cleavage groove 114 can have an alphabet "U" like configuration by which the single lid 113 is unclosed. The cleavage groove 114 may also have a square-like configuration, a rectangular-like configuration, or other suitable configuration.

The cleavage groove 114 includes a vertical cleavage line 115 and a horizontal cleavage line 116 which are formed linearly or substantially linearly. The vertical cleavage line 115 and the horizontal cleavage line 116 are combined to structure the configuration of the cleavage groove 114. The horizontal cleavage line 116 includes a tear line 117, and a hinge line 118. The tear line 117 corresponding to a front end edge or a tip edge of the lid 113, and the hinge line 118 corresponding to a back end edge or a posterior end edge of the lid 113. A point of intersection of the vertical cleavage line 115 and the hinge line 118 may have a round configuration, a smooth configuration or the like.

The airbag lid member 104 may be a hard panel member including a resin material and having a single-layered structure as illustrated in FIG. 11, for example. The cleavage groove 114 can be formed, for example, by a laser process. Preferably, a laser beam of the laser process is so irradiated onto the hard panel member that an output of the laser beam is increased by every few pulses.

Referring to FIG. 8, the airbag lid member 104 and the airbag module 103 are coupled together through an attachment frame 121.

The attachment frame 121 integrally includes a flange 122, an attachment leg 123, a door 124, and an elongated part 125. The flange 122 is fixed to an outer circumferential part of the opening 111 on a back surface of the general surface 112. The attachment leg 123 extends downwardly or substantially downwardly along the opening 111 from an inner edge of the flange 122. The door 124 is fixed to a back surface of the lid 113. The elongated part 125 connects a base of the attachment leg 123 and a back end edge of the door 124, and has a configuration in which a part of the elongated part 125 diverts or protrudes downwardly toward the airbag module 103. The door 124 may be formed with a slit 126 having a configuration corresponding to or substantially corresponding to the cleavage groove 114, for example. It is to be noted that the elongated part 125 is not fixed to the back surface of the airbag lid member 114.

The airbag module 103 is inserted into the attachment leg 123 and arranged inside of the attachment leg 123 in such a manner as to have a predetermined distance away from the attachment leg 123.

A forward surface and a backward surface of the attachment leg 123 are formed with a latching hole 131. Each part of the airbag module 103 located correspondingly to each other above or substantially above a forward surface and a backward surface of the airbag module 103 is attached with a hook 132. The hooks 132 protrude from the forward surface and the backward surface of the airbag module 103, respectively. Each of the hooks 132 is inserted with a loose-fitted manner into the latching hole 131 to be latched thereby, such that the airbag module 103 is loosely coupled between the attachment legs 123. The module container 108 is possible to provide the latching hole 131 and the hook 132 to be loosely fitted with each other, since the lower part of the module container 108 is fixed to the unillustrated vehicle-body reinforcing member.

In the present embodiment, the airbag lid member 104 is integrated with the instrument panel 102 as an integrated airbag lid member to utilize the instrument panel 102 itself as the airbag lid member 104. In one embodiment, the airbag lid member 104 is integrated with a partial instrument panel 102 which is provided only for a side of an occupant seat. Alternatively, the airbag lid member 104 can be a separate airbag lid member attached to a part in the vicinity of or around the opening 111 formed on the instrument panel 102 as a lid member attachment part.

Referring to FIGs. 9 and 10, according to the present embodiment of the invention, the hinge line 118 of the cleavage groove 114 is provided with a delayed rupture generating part 135. The delayed rupture generating part 135 is capable of generating lag in rupturing of the hinge line 118 by its configuration.

More specifically, the delayed rupture generating part 135 is a protruded part 136 or a diverted part partially formed in mid-course of the hinge line 118 which is linear or substantially linear.

The protruded part 136 has, for example, a round configuration, a partially circular arc configuration, or other configuration equivalent thereto, which protrudes or diverted toward an outside part of the opening 111. The protruded part 136 may not function sufficiently when a size thereof is too small, whereas the lid 113 may become difficult to open or the protruded part 136 may become conspicuous from outside thereof when the size is too large. Thus, it is preferable that the protruded part 136 have an amount of protrusion of about 0.5mm to 2mm in an actual size.

In the present embodiment, the protruded part 136 is provided in a central part of each of the hinge lines 118 and on both sides of the central part, i.e., three protruded parts 136 are provided for each of the hinge lines 118, although the number and location of the protruded part 136 are not limited thereto.

FIG. 11 is a cross-sectional view of the tear line 117 illustrated in FIG. 10 taken along a line C-C, and FIG. 12 is a cross-sectional view of the hinge line 118 illustrated in FIG. 10 taken along a line D-D, according to the present embodiment. Referring to FIGs. 11 and 12, the hinge line 118 includes the delayed rupture generating part 135 or the protruded part 136, so that an amount of residual thickness a' of the entire cleavage groove 114 is even or substantially constant.

According to the present embodiment having the above-described structure, the airbag body 106, folded in the module container 108 to be stored therein, is expanded and deployed inside of the instrument panel 102, by supplying of the pressure gas from the inflator 107 due to activation of the inflator 107 at the time when impact force equal to or more than a predetermined value is applied to a body of the vehicle. The deployed airbag body 106 is guided by the attachment leg 123 to press a predetermined part of the back surface of the airbag lid member 104 including the door 124 and the lid 113, so as to rupture or cleave the cleavage groove 114. Thereby, the lid 113 is unclosed to open the opening 111, and the airbag body 106 is swelled into the vehicle interior toward the occupant to receive the seated occupant so as to protect the occupant from hitting the instrument panel 102.

It is preferable that the lid 113 be so rotated that a position of the hinge line 118 becomes the center of hinge for the rotation of the lid 113, when the lid 113 is unclosed by the pressing of the airbag body 106. In this connection, the hinge line 118 according to the present embodiment includes the delayed rupture generating part 135 or the protruded part 136. Hence, strength of the hinge line 118 is increased to ensure delayed rupturing of the hinge line 118. Thus, the hinge line 118 does not rupture earlier than predetermined time of the rupturing of the hinge line 118 or does not rupture virtually simultaneously with the tear line 117, irrespective of a variation in behavior of deployment of the airbag body 106. Accordingly, the position of the center of hinge, i.e., a position of the back end edge of the lid 113, does not shift from the opening 111 outwardly to the general surface 112. Therefore, problems such as improper pivot of the lid 113 around the center of hinge, parallel displacement of the lid 113, excessive stretch of the elongated part 125, and so forth does not occur.

In addition, since the strength of the hinge line 118 is increased by the delayed rupture generating part 135 or the protruded part 136, it is possible to uniformize the amounts of residual thickness a' in the tear line 117 and in the hinge line 118. Therefore, difficulty in setting and adjustment of the amounts of the residual thickness between a hinge line and a tear line due to delicate fabrication of changing the amounts of residual thickness of the hinge line and the tear line in an example in which a difference in the amounts of residual thickness or a difference in thickness between the hinge line and the tear line is provided, is solved.

Accordingly, it is possible to extract the following (1) to (5) from the above-described exemplary embodiments of the present invention.

(1) An airbag lid structure, comprising: an airbag lid member provided on an instrument panel and which forms an opening for swelling an expanded airbag body therefrom toward a vehicle interior; a cleavage groove formed on a back surface of the airbag lid member on an opposite side of the vehicle interior, and which defines the airbag lid member into a general surface and a lid, the general surface being located outside of the opening and the lid being located inside of the opening, wherein the lid includes a front end edge, and a back end edge corresponding to center of rotation of the lid; a first cleavage line structuring the cleavage groove and extending in a first direction; a second cleavage line structuring the cleavage groove and extending in a second direction substantially perpendicular to the first direction; a tear line included in the second cleavage line and corresponding to the front end edge of the lid; and a hinge line included in the second cleavage line and corresponding to the back end edge of the lid, and having a delayed rupture generating part which generates lag in rupturing of the hinge line relative to the tear line.

Therefore, it is possible to provide the airbag lid structure capable of heightening certainty and increasing stability in acting of an airbag device, irrespective of a variation in behavior of deployment of an airbag body.

More specifically, the delayed rupture generating part is provided to create a configuration of the hinge line so as to increase strength of the hinge line, such that delay is generated in rupture of the hinge line. Hence, certainty and stability in acting of an airbag body are increased as compared with an example in which a difference in amounts of residual thickness is employed. Accordingly, a position of the hinge line is set as the center of hinge even there is a variation in behavior of deployment of the airbag body. Therefore, it is possible to solve a problem caused by a shift of the position of the hinge center. Additionally, there is no necessity of performing a process for changing the amount of residual thickness and of increasing the number of component parts. Therefore, it is possible to provide the cost-reduced and simplified airbag lid structure.

(2) The airbag lid structure according to (1), wherein the delayed rupture generating part comprises a protruded part provided in middle in a substantially linear part of the hinge line.

Accordingly, the protruded part provides friction and withstands when the lid opens. Therefore, it is possible to ensure the certainty and stability in acting of the airbag body irrespective of the variation in behavior of deployment of the airbag body, and to ensure that the problem caused by the shift of the position of the hinge center is solved, in a simplified manner. It is also possible to ensure the cost-reduced and simplified airbag lid structure, easily.

(3) The airbag lid structure according to (2), wherein the protruded part protrudes in the first direction from the lid toward the general surface.

Accordingly, the protruded part is provided to create a configuration of the hinge line in which the protruded part extends in the first direction from the lid toward the general surface, by which the strength of the hinge line is increased. Therefore, it is possible to ensure the delay in rupture of the hinge line.

(4) The airbag lid structure according to (2) or (3), wherein the protruded part has a partially circular arc configuration.

Accordingly, the protruded part is provided to create the partially circular arc configuration of the hinge line which ensures the increase in the strength of the hinge line, such that delay is generated in rupture of the hinge line. Therefore, it is possible to provide the airbag lid structure capable of further heightening certainty and further increasing stability in acting of the airbag device, irrespective of the variation in behavior of deployment of the airbag body.

(5) The airbag lid structure according to any one of (2) to (4), wherein the protruded part has an amount of protrusion of about 0.5mm to 2mm.

The protruded part may not function sufficiently when a size thereof is too small, whereas the lid may become difficult to open or the protruded part may become conspicuous from outside thereof when the size is too large. Thus, it is preferable that the protruded part have an amount of protrusion of about 0.5mm to 2mm in an actual size. Therefore, it is possible to further heighten certainty and to further increase stability in acting of the airbag device, irrespective of the variation in behavior of deployment of the airbag body.

Although the present invention has been described in terms of exemplary embodiments, it is not limited thereto. It should be appreciated that variations may be made in the embodiments described by persons skilled in the art without departing from the scope of the present invention as defined by the following claims. The limitations in the claims are to be interpreted broadly based on the language employed in the claims and not limited to examples described in the present specification or during the prosecution of the application, and the examples are to be construed as non-exclusive. For example, in the present disclosure, the term "preferably", "preferred" or the like is non-exclusive and means "preferably", but not limited to. The use of the terms first, second, etc. do not denote any order or importance, but rather the terms first, second, etc. are used to distinguish one element from another. Moreover, no element or component in the present disclosure is intended to be dedicated to the public regardless of whether the element or component is explicitly recited in the following claims.

## Claims

1. An airbag lid structure, comprising:
an airbag lid member (104) provided on an instrument panel (102) and which forms an opening (111) for swelling an expanded airbag body (106) therefrom toward a vehicle interior;
a cleavage groove (114) formed on a back surface of the airbag lid member (104) on an opposite side of the vehicle interior, and which defines the airbag lid member (104) into a general surface (112) and a lid (113), the general surface being located outside of the opening (111) and the lid (113) being located inside of the opening (111), wherein the lid (113) includes a front end edge, and a back end edge corresponding to center of rotation of the lid (113);
a first cleavage line (115) structuring the cleavage groove (114) and extending in a first direction;
a second cleavage line (116) structuring the cleavage groove (114) and extending in a second direction substantially perpendicular to the first direction;
a tear line (117) included in the second cleavage line (116) and corresponding to the front end edge of the lid (113); and
a hinge line (118) included in the second cleavage line (116) and corresponding to the back end edge of the lid (113),
wherein
the hinge line (118) includes a delayed rupture generating part (135) which generates lag in rupturing of the hinge line (118) relative to the tear line (117).

2. The airbag lid structure according to Claim 1, wherein the delayed rupture generating part (135) comprises a protruded part (136) provided in middle in a substantially linear part of the hinge line (118).

3. The airbag lid structure according to Claim 2, wherein the protruded part (136) protrudes in the first direction from the lid (113) toward the general surface (112).

4. The airbag lid structure according to Claim 2 or 3, wherein the protruded part (136) has a partially circular are configuration.

5. The airbag lid structure according to any one of Claims 2 to 4, wherein the protruded part (136) has an amount of protrusion of about 0.5mm to 2mm.
